# EUROPÄISCHE PATENTSCHRIFT

(11) **EP 2 254 795 B1**
(45) Veröffentlichungstag und Bekanntmachung des Hinweises auf die Patenterteilung: **26.10.2011**
(21) Anmeldenummer: 09708711.8
(22) Anmeldetag: 04.02.2009
(51) Int. Cl.: B64D 33/02, B64D 15/16

(54) **TRIEBWERKS-EINLAUFKLAPPE ZUR ANBRINGUNG AN DEM GEHÄUSE EINES LUFTEINLASSES EINES FLUGZEUG-TRIEBWERKS SOWIE TRIEBWERK MIT EINER SOLCHEN TRIEBWERKS-EINLAUFKLAPPE UND FLUGZEUGSYSTEM**
ENGINE INLET FLAP FOR MOUNTING ON THE HOUSING OF AN AIR INLET OF AN AIRCRAFT ENGINE AND ENGINE FITTED WITH SUCH AN ENGINE INLET FLAP AND AIRCRAFT SYSTEM
VOLET D'ADMISSION DE SYSTEME DE PROPULSION A MONTER SUR UNE ENTREE D'AIR D'UN SYSTEME DE PROPULSION, SYSTEME DE PROPULSION MUNI D'UN TEL VOLET D'ADMISSION ET SYSTEME D'AERONEF

(30) Priorität: 04.02.2008 US 25857; 04.02.2008 DE 102008007469
(43) Veröffentlichungstag der Anmeldung: 01.12.2010
(73) Patentinhaber: Airbus Operations GmbH, 21129 Hamburg (DE)
(72) Erfinder: BOLENDER, Lars, 22419 Hamburg (DE); WAGNON, Sébastien, 6370 Oberdorf (CH)
(74) Vertreter: Schatt, Markus F.
(86) Internationale Anmeldenummer: PCT/EP2009/000753
(87) Internationale Veröffentlichungsnummer: WO 2009/098044

(56) Entgegenhaltungen:
- US-A- 3 652 036
- US-A- 3 664 612
- US-A- 3 770 228

## Beschreibung

Die Erfindung betrifft eine Triebwerks-Einlaufklappe zur Anbringung an dem Gehäuse eines Lufteinlasses oder Lufteinlaufkanals eines Triebwerks eines Flugzeugs sowie Triebwerk mit einer solchen Triebwerks-Einlaufklappe und ein Flugzeugsystem mit einem als Hilfstriebwerk ausgeführten Triebwerk. Dabei betrifft die Erfindung insbesondere ein Verlängerungsteil für einen schwenkbaren Grundkörper einer Einlaufklappe, das zur Verhinderung der Verkleinerung oder Versperrung des Einlaufs bei Eisbildung vorgesehen ist, mit einem ersten Seitenrand zur Verbindung mit einem Einlaufklappen-Grundkörper, einem zweiten, dem ersten Seitenrand entgegengesetzt gelegenem Seitenrand, und einem dritten und vierten Seitenrand, die sich jeweils vom ersten Seitenrand bis zum zweiten Seitenrand erstrecken. Weiterhin betrifft die Erfindung eine Einlaufklappe, Einlaufklappe mit einem solchen Verlängerungsteil und Triebwerk mit einer Einlaufklappe.

Der Einlauf kann insbesondere der Triebwerkseinlauf wie z.B. der Triebswerkseinlauf eines Flugzeugs sein. Der Einlauf kann darüber hinaus auch eine Luftzufuhr für andere Aggregate und Komponenten, wie z.B. ein Turbinen-Laufrad für ein Hilfstriebwerk oder einen Generator sein.

Die US 3 652 036, die alle Merkmale des Oberbegriffs der unabhängigen Ansprüche 1 und 6 offenbart, die US 3 664 612 und die US 3 770 228 beschreiben jeweils einen Triebwerkseinlauf, an dem zur Veränderung der Kontur des vorderen Bereichs des Triebwerkseinlaufs eine Mehrzahl von bewegbaren Klappen angebracht ist.

Eisansatz an Einlaufklappen-Vorderkanten und insbesondere an den Triebwerkseinlaufklappen-Vorderkanten kann dazu führen, dass der Druckverlust über dem Triebwerkslufteinlauf hoch ist. Dies hängt mit der Versperrung der Triebwerksklappeneinlauf-Öffnung durch plötzlich oder kontinuierlich im Flug entstehenden Eisansatz an der Vorderkante zusammen. Die Folge des Eisansatzes ist eine verminderte Leistung der Turbine aufgrund von Strömungsverlusten. Im Stand der Technik sind folgende Lösungen bekannt und werden eingesetzt:
- pneumatische Enteisungsmatten,
- elektro-thermische Enteisung,
- Warmluftenteisung,
- Flüssigkeits-Eisverhütung (nur am Boden).

In Ermangelung zuverlässiger Methoden zur Detektion von Eisansatz im Fluge werden derzeit schon Gegenmaßnahmen getroffen, sobald sich ein Flugzeug in meteorologischen Bedingungen befindet, die zu einem Eisansatz führen könnten.

Die bekannten Methoden zur Verhütung oder Entfernung von Eisansatz erfordern Energie, die dem bordeigenen System entnommen werden muss. Speziell bei Eisansatz an Triebwerkseinläufen müssen rechtzeitig wirksame Gegenmaßnahmen ergriffen werden, um Eisansaugung und eine dadurch bedingte Turbinenschaufelbeschädigung im Triebwerk zu vermeiden. Um dies zuverlässig zu ermöglichen, muss ein aufwändiges Kontrollsystem an den kritischen Stellen installiert sein, mit einer geeigneten Regelung und/oder Steuerung.

Eine Aufgabe der Erfindung ist daher, die Einlaufströmung zu optimieren und dabei mit einfachen Mitteln zu verhindern, dass der Einlauf eines Triebwerkes durch Eisbildung während des Fluges versperrt wird.

Diese Aufgabe wird mit den Merkmalen der unabhängigen Patentansprüche gelöst. Weitere Ausführungsbeispiele der Erfindung sind in den auf diese rückbezogenen Unteransprüchen angegeben.

Die erfindungsgemäße Einlaufklappe und insbesondere die Mehrzahl von Einlaufklappen für ein Triebwerk ist zur Anbringung an dem Gehäuse eines Lufteinlasses oder Lufteinlaufkanals eines Triebwerks eines Flugzeugs vorgesehen. Die Einlaufklappe ist zur Anbringung an dem vorderen, d.h. bei dem bestimmungsgemäßen Einsatz der Strömung zugewandten Randbereich des Einlaufs oder des Einlaufkanals vorgesehen. Das Gehäuse kann die Flugzeugstruktur, in den der Einlaufkanal integriert ist, oder das Gehäuse eines externen Triebwerks sein. Nach einem Ausführungsbeispiel der erfindungsgemäßen Triebwerks-Einlaufklappe zur Anbringung an dem Gehäuse eines Lufteinlasses oder Lufteinlaufkanals eines Triebwerks eines Flugzeugs mit einem ersten Ende und einem entgegengesetzt zu diesem gelegenen und in der Längsrichtung der Einlaufklappe beabstandeten zweiten Ende, wobei die Längsrichtung bei dem bestimmungsgemäßen Einsatz entgegen die Strömungsrichtung der in das Triebwerk fließenden Luft gerichtet ist, weist die Einlaufklappe auf:
■ einen Einlaufklappen-Grundkörper mit einer Anschlussvorrichtung für eine Gelenkverbindung zur gelenkigen Verbindung des Einlaufklappen-Grundkörpers an dem Gehäuse des Lufteinlasses oder Lufteinlaufkanals mit einer entlang dem zweiten Ende verlaufenden Drehachse,
■ ein mit dem Einlaufklappen-Grundkörper strukturell integriertes Einlaufklappen-Verlängerungsteil, das ein erstes und ein zweites Seitenteil aufweist, das sich jeweils an den zwei entgegen gesetzt zueinander gelegenen und in der Längsrichtung verlaufenden Seitenrändern der Einlaufklappe von dem Einlaufklappen-Grundkörper aus erstreckt,
■ mit einer Mehrzahl von Querstreben, die an den Seitenteilen angeordnet sind und quer zur Längsrichtung zwischen diesen verlaufen.

Dabei kann der Einlaufklappen-Grundkörper und das Einlaufklappen-Verlängerungsteil einstückig gefertigt sein. Alternativ dazu kann das Einlaufklappen-Verlängerungsteil als ein auf dem Einlaufklappen-Grundkörper aufsetzbares Bauteil auf dem Einlaufklappen-Grundkörper montiert sein.

Nach einem Ausführungsbeispiel der Erfindung sind die Querstreben an den Seitenteilen drehfest angeordnet. Alternativ oder zusätzlich kann zumindest ein Teil der Querstreben an den Seitenteilen um ihre Längsachse drehbar angeordnet sein. Generell kann vorgesehen sein, dass die Querschnitte der Querstreben eine Flügelform haben.

In diesem Fall, jedoch auch in anderen Ausgestaltungen der Querstreben kann vorgesehen sein, dass zumindest ein Teil der Querstreben in eine Ausgangsstellung federnd vorgespannt sind.

Weiterhin kann bei den Ausführungsbeispielen der Erfindung vorgesehen sein, dass die Querstreben aus elastischem Material gebildet sind, bei dem diese sich bei den bestimmungsgemäß auftretenden und entlang der Längsrichtung strömenden Luftströmung in einem Maße biegen und/oder verwinden, dass eine auf den Querstreben gebildete Eisschicht abgesprengt werden kann.

Nach einem Ausführungsbeispiel kann generell vorgesehen sein, dass zwischen den Seitenteilen zumindest ein an dem Einlaufklappen-Grundkörper angeordneter und sich in der Längsrichtung erstreckender Längssteg angeordnet ist und dass zwischen jeweils einem Seitenteil und einem Längssteg oder zwischen zwei Längsstegen eine Mehrzahl von Querstreben verläuft.

Nach einem weiteren Ausführungsbeispiel der Erfindung ist eine Triebwerks-Einlaufklappe zur Anbringung an dem Gehäuse eines Lufteinlasses oder Lufteinlaufkanals eines Triebwerks eines Flugzeugs vorgesehen mit einem ersten Ende und einem entgegengesetzt zu diesem gelegenen und in der Längsrichtung der Einlaufklappe beabstandeten zweiten Ende, wobei die Längsrichtung bei dem bestimmungsgemäßen Einsatz entgegen die Strömungsrichtung der in das Triebwerk fließenden Luft gerichtet ist, die Einlaufklappe aufweisend:
■ einen Einlaufklappen-Grundkörper mit einer Anschlussvorrichtung für eine Gelenkverbindung zur gelenkigen Verbindung des Einlaufklappen-Grundkörpers an dem Gehäuse des Lufteinlasses oder Lufteinlaufkanals mit einer entlang dem zweiten Ende verlaufenden Drehachse,
■ ein mit dem Einlaufklappen-Grundkörper strukturell integriertes Einlaufklappen-Verlängerungsteil, das ein erstes und ein zweites Seitenteil aufweist, das sich jeweils an den zwei entgegen gesetzt zueinander gelegenen und in der Längsrichtung verlaufenden Seitenrändern der Einlaufklappe von dem Einlaufklappen-Grundkörper aus erstreckt,
■ mit einer Mehrzahl von Längsstreben, die an dem Einlaufklappen-Grundkörper angeordnet sind und sich jeweils in der Längsrichtung der Einlaufklappen erstrecken.

Dabei kann der Einlaufklappen-Grundkörper und das Einlaufklappen-Verlängerungsteil einstückig gefertigt sein. Alternativ dazu kann das Einlaufklappen-Verlängerungsteil als ein auf dem Einlaufklappen-Grundkörper aufsetzbares Bauteil auf dem Einlaufklappen-Grundkörper montiert sein.

Weiterhin kann bei den Ausführungsbeispielen der Erfindung vorgesehen sein, dass die Längsstreben aus elastischem Material gebildet sind, bei dem diese sich bei den bestimmungsgemäß auftretenden und entlang der Längsrichtung strömenden Luftströmung in einem Maße biegen und/oder verwinden, dass eine auf den Längsstreben gebildete Eisschicht abgesprengt werden kann.

Nach einem weiteren Aspekt der Erfindung ist ein Triebwerk mit einem von einem Triebwerksgehäuse gebildeten Lufteinlauf vorgesehen, wobei an dem der bestimmungsgemäß vorliegenden Luftströmung entgegen gerichteten vorderen Randbereich wenigstens eine Triebwerks-Einlaufklappe nach einem Ausführungsbeispiel der Erfindung angeordnet ist. Dabei kann vorgesehen sein, dass in der Strömungsrichtung gesehen entlang des Umfangs des Triebwerksgehäuses mehrere der Triebwerks-Einlaufklappen nebeneinander angeordnet sind.

Nach einem weiteren Aspekt der Erfindung ist ein Triebwerk mit Triebwerks-Einlaufklappen vorgesehen, an denen jeweils zumindest ein Stellantrieb zur Verstellung der jeweiligen Triebwerks-Einlaufklappe um deren Drehachse angeordnet ist, wobei das Triebwerk eine Ansteuerungsvorrichtung aufweist, die eine Ansteuerungsfunktion mit einer Schnittstelle zu einem Flugführungssystem und/oder einem Triebswerkssteuerungssystem aufweist und die derart ausgeführt ist, dass diese auf den Empfang von Luftdaten von dem Flugführungssystem und/oder einer aktuellen oder geforderten Triebwerksleistung von dem Flugführungssystem und/oder dem Triebwerkssteuerungssystem Kommandosignale zur Kommandierung der Stellantriebe der Triebwerks-Einlaufklappen erzeugt und an die die Stellantriebe der Triebwerks-Einlaufklappen sendet, um die Triebwerks-Einlaufklappen um ihre Drehachse (A) zur Einstellung der Strömung im Einlauf zu verstellen.

Nach einem weiteren Ausführungsbeispiel ist ein Triebwerk mit der Ausgestaltung der Triebwerks-Einlaufklappen mit um ihre Längsachse drehbaren Längsstreben vorgesehen, das Aktuatoren aufweist, die an zumindest einem Teil der Längsstreben zur Veränderung der Drehsstellung der Querstreben angekoppelt sind, dass das Triebwerk eine Ansteuerungsvorrichtung aufweist, die eine Ansteuerungsfunktion mit einer Schnittstelle zu einem Flugführungssystem und/oder eine Triebwerkssteuerungssystem aufweist und die derart ausgeführt ist, dass diese auf den Empfang von Luftdaten von dem Flugführungssystem und/oder einer aktuellen oder geforderten Triebwerksleistung von dem Flugführungssystem und/oder dem Triebswerkssteuerungssystem die Stellantriebe zur Veränderung der Drehstellung der Querstreben ansteuern kann, um die Querstreben um ihre Längsachse zur Einstellung der Strömung im Einlauf zu verstellen.

Die Ansteuerungsfunktion kann insbesondere derart ausgeführt sein, dass diese als Luftdaten die Strömungsgeschwindigkeit des Flugzeugs verwendet.

Auch kann vorgesehen sein, dass als Luftdaten eine im Bereich des Triebwerkseinlaufs gemessene Strömungsgeschwindigkeit und/oder Temperatur der strömenden Luft als Eingangsignal zur Verwendung durch die Ansteuerungsfunktion verwendet wird.

Nach der Erfindung ist auch ein Flugzeugsystem mit einer Hilfsenergie-Versorgungseinrichtung mit einem als Hilfstriebwerk ausgeführten Triebwerk vorgesehen, das nach einer erfindungsgemäßen Ausführungsform ausgeführt ist. Dabei kann insbesondere vorgesehen sein, dass die Ansteuerungsfunktion eine Funktion aufweist, mit der die Klappen zwischen einer Abdeckungsstellung, bei der der Durchsatz der Einlaufströmung minimal ist, und einer offenen Stellung, bei der der Durchsatz der Einlaufströmung maximal ist, bewegt werden können, dass das Flugzeugsystem eine Energieversorgungs-Vorrichtung aufweist, die ein Kommandosignal an die Ansteuerungsfunktion zum Bewegen der Triebwerks-Einlaufklappen von ihrer Abdeckungsstellung in ihre offene Stellung sendet, wenn sich die Energieversorgungsvorrichtung das Hilfstriebwerk aktiviert.

Erfindungsgemäf3 weist das Verlängerungsteil für einen Einlaufklappen-Grundkörper einen ersten Seitenrand zur Verbindung des Verlängerungsteils mit einem Einlaufklappen-Grundkörper auf, einen zweiten, dem ersten Seitenrand entgegengesetzt gelegenen und in Längsrichtung des Verlängerungsteils beabstandet gelegenen zweiten Seitenrand, und einen dritten und vierten Seitenrand, wobei der dritte und der vierte Seitenrand sich jeweils vom ersten Seitenrand bis zum zweiten Seitenrand erstrecken. Mit anderen Worten, das Verlängerungsteil weist einen Körper auf, der seitlich durch vier Seitenränder begrenzt bzw. definiert ist. Wenn das Verlängerungsteil oder das Klappen-Verlängerungsteil auf den Grundkörper, der bewegungsfest oder schwenkbar an einem Einlauf-Bauteil angekoppelt ist, aufgesetzt ist, wird zumindest in bestimmten Einsatzzuständen eine Verkleinerung des Einlaufs durch Eisbildung an der Einlaufklappe verhindert und insbesondere die Versperrung des Einlaufs bei Eisbildung an verkleinert.

Dabei können der dritte und der vierte Seitenrand eine Länge L1 in Längsrichtung des Verlängerungsteils aufweisen und an dem zweiten Seitenrand eine Ausnehmung bilden, mit zwei einander gegenüberliegenden Seitenrand-Innenseiten, die jeweils entlang des dritten und vierten Seitenrands verlaufen, und einer quer zum dritten und vierten Seitenrand verlaufenden, deren innere Enden verbindenden Ausnehmungsrückrand. Das heißt, die Ausnehmung wird an drei Seiten von dem Verlängerungskörper begrenzt, die vierte Seite dagegen wird nicht durch einen Teil des Verlängerungskörpers begrenzt. Statt durch einen Rand des Verlängerungskörpers kann der Ausnehmungsrückrand auch durch einen Rand oder eine Kante des Einlaufklappen-Grundkörpers gebildet sein. Die Länge L1 des dritten und vierten Seitenrands kann gleich sein, es ist allerdings auch möglich, dass die beiden Längen unterschiedlich sind, so dass eine aus dritter oder vierter Seite des Verlängerungsteils weiter vom Einlaufklappen-Grundkörper vorsteht als die andere aus dritter und vierter Seite.

Als Verlängerung des Einlaufklappen-Grundkörpers kann das Verlängerungsteil die Form des Grundkörpers fortsetzen, beispielsweise einen gleichen Krümmungsradius haben, wie der Grundkörper. Das Verlängerungsteil kann aber auch bei einem gebogenen Grundkörper gerade gebildet sein, oder eine andere Form haben, die keine Fortsetzung der Form des Grundkörpers ist. Das Verlängerungsteil kann auf Stoß mit dem Grundkörper verbunden sein, es kann auf der Oberfläche oder an der Unterseite des Grundkörpers befestigt sein, und schließlich kann das Verlängerungsteil in einem Verbindungsbereich auf den Grundkörper aufgesteckt oder in ein offenes bzw. geöffnetes Ende des Grundkörpers eingesteckt sein.

Das Verlängerungsteil kann auch mehr als eine Ausnehmung aufweisen, die insbesondere quer zur Längsrichtung gesehen nebeneinander angeordnet sind, wobei die mehreren Ausnehmungen dadurch gebildet sein können, das eine oder mehrere Streben die zuvor beschriebene eine Ausnehmung unterteilen und jeweils zwischen zwei benachbarten Streben je eine Ausnehmung gebildet ist.

Dabei können die Streben Querstreben sein, die sich vom dritten Seitenrand zum vierten Seitenrand erstrecken. In der Ausnehmung zwischen dem dritten und dem vierten Seitenrand können zusätzlich Längsstege, das heißt parallel zu dem dritten und vierten Seitenrand verlaufende Stege, vorhanden sein, die die Stabilität der Querstreben erhöhen. Die Stege können dabei entweder nur mit den Querstreben verbunden sein, sie können aber auch fest mit dem Ausnehmungsrückrand verbunden oder mit diesem einstückig geformt sein, und die Querstreben fest oder beweglich führen.

Die Querstreben können alle eine identische Form aufweisen, sie können aber auch hinsichtlich ihrer Geometrie variieren. Die Ausnehmungen können alle gleich groß sein, die Querstreben können aber auch unterschiedliche Abstände zueinander aufweisen, wodurch auch die zwischen den Querstreben Ausnehmungen unterschiedlicher Größe gebildet würden. Schließlich können je zwei Querstreben parallel zueinander verlaufen, so dass die Querstreben immer den gleichen Abstand zueinander aufweisen, oder zueinander in einem Winkel angeordnet sein, so dass sich die Breite der Ausnehmung zwischen zwei Querstreben von einer Seitenwand zur anderen ändert.

Die Querstreben können mit dem dritten und vierten Seitenrand fest gekoppelt sein, das heißt, die Querstreben können sich relativ zu dem dritten und vierten Seitenrand nicht bewegen. Die Querstreben können in den Seitenrändern aber auch drehbeweglich gelagert sein, so dass sie um eine Längsachse der Querstrebe schwenken können.

Zwischen der dritten Seitenwand und der vierten Seitenwand können zusätzlich Längsstege angeordnet sein, die die Querstreben stabilisieren, indem sie ein Durchbiegen der Querstreben verhindern. Dabei können die Querstreben in Teil-Querstreben unterteilt sind, die jeweils von einer Seitenwand zu dem nächstliegenden Längssteg reichen, oder die Längsstege können Öffnungen aufweisen, durch die sich die Querstreben von einer Seitenwand bis zur nächsten erstrecken. Beim Vorhandensein von mehreren Längsstreben können auch einige der Querstreben Öffnungen aufweisen, während andere zur Lagerung oder Verbindung mit den dann Teil-Querstreben dienen.

Die schwenkbeweglichen Querstreben können in ihrer Ruheposition durch beispielsweise eine Federkraft vorgespannt sein. Aus dieser Ruheposition können sie im Fluge in Abhängigkeit von einem anliegenden Luftstrom ausgelenkt werden, beim Nachlassen der Luftkräfte, zum Beispiel nach der Landung, werden dann die Querstreben durch die Federkraft wieder in ihre Ruheposition zurückgeholt. Die Stärke des an der Querstrebe angreifenden Luftstroms kann abhängig sein von der Strömungsgeschwindigkeit und/oder von der Anströmrichtung der das Verlängerungsteil an- oder umströmenden Luft.

Die fest in den Seitenrändern gehaltenen Querstreben können aus einem flexiblen, elastischen Material bestehen oder solches aufweisen, so dass sie sich bei Belastung durch die anströmende Luft in sich verdrehen oder verwinden können, beim oder nach dem Nachlassen der Belastung wieder in ihre Grundform zurückkehren.

Um einen niedrigen Luftwiderstand zu bieten und möglichst wenig Verwirbelungen im Bereich der Verlängerung entstehen zu lassen, können die die Oberflächen oder zumindest Teile der Oberflächen der Querstreben an einer gedachten Fortführung der Oberflächenkontur einer Oberseite des Verlängerungsteils liegen. Die Querstreben können eine konstante Materialdicke aufweisen, sie können aber auch Bereiche unterschiedlicher Materialdicke aufweisen, zum Beispiel geringere Materialdicke an ihren Kanten, was den Luftfluss um die Querstreben verbessern kann und/oder ihr Flexibilitätsverhalten im Luftstrom beeinflussen kann, um im Flug effektiver den Ansatz von Eis im Bereich der Verlängerung zu verhindern oder einem übermäßigem Eisansatz in diesem Bereich entgegenzuwirken.

Das Verlängerungsteil kann auch insgesamt dadurch gebildet sein, dass aus einem kompakten Verlängerungsteilkörper die Ausnehmungen ausgestanzt oder mittels Laserstrahl oder Wasserstrahl ausgeschnitten sind.

Die Streben können auch Längsstreben sein, die in Längsrichtung des Verlängerungsteils verlaufen, und wobei die zwischen den Längsstreben gebildeten Öffnungen an der zweiten Seite des Verlängerungsteils offen sind. Die in der Ausnehmung gelegenen Enden der Öffnungen können auf einer gemeinsamen Linie liegen, die Öffnungen können aber auch unterschiedlich weit in die Ausnehmung hineinreichen. So können äußeren Öffnungen länger oder kürzer sein als innere Öffnungen oder vice versa. Auch die Breite der Öffnungen kann variieren. Die Längsstreben können überall die gleiche Dicke aufweisen, sie können aber auch Bereiche unterschiedlicher Materialdicke aufweisen. Dadurch kann zum Beispiel ein Vibrationsverhalten der Längsstreben im Luftstrom beeinflusst werden, um beispielsweise der Eisbildung an den Längsstreben entgegenzuwirken oder einer übermäßigen Eisbildung in diesem Bereich vorzubeugen.

Die Längsstreben können zusammen mit der Verlängerung in einem Stück gefertigt sein, so dass die Oberflächen der Längsstreben übergangslos in die Oberfläche der Verlängerung übergehen. Die einlaufklappen-grundkörper-seitigen Enden der Öffnungen können linear oder halbkreisförmig gebildet sein, sie können zum besseren Einleitung der auf die Längsstreben wirkenden Kräfte in die Verlängerung entsprechend bearbeitet, zum Beispiel gefräst sein.

Grundsätzlich kann die Verlängerung unterschiedliche Materialien aufweisen, zum Beispiel ein Material für den Verlängerungskörper und ein anderes Material für die Streben. Auch die Streben können entsprechend ihrer Anforderungen unterschiedliche Materialien aufweisen, zum Beispiel einen Kern aus einem verwindungssteifen Material und einer darauf gebildeten Außenhaut aus flexiblem Material. Die Verlängerung kann aber auch aus einem Material, zum Beispiel aus Metall oder einem Material mit metallischen Eigenschaften oder aus einem Verbundmaterial, beispielsweise GFK, bestehen.

Die Erfindung betrifft weiterhin eine Triebwerkseinlaufklappe mit einem Einlaufklappen-Grundkörper mit einem ersten Einlaufklappen-Grundkörper-Ende zur gelenkigen Verbindung an einer Triebwerksumwandung, einem Verlängerungsteil wie vorlaufend beschrieben, das mit seinem ersten Seitenrand mit einem zweiten Einlaufklappen-Grundkörper-Ende, das zum ersten Einlaufklappen-Grundkörper-Ende entgegengesetzt gelegen ist, verbunden ist. Dabei kann das Verlängerungsteil entgegen der bestimmungsgemäßen Strömungsrichtung frei von dem Einlaufklappen-Grundkörper abragen.

Dabei können der Einlaufklappen-Grundkörper und das Verlängerungsteil einstückig hergestellt sein, das heißt sie bilden ein integriertes Bauteil. Andererseits kann das Verlängerungsteil auch ein separates Bauteil zu dem Einlaufklappen-Grundkörper sein, das nachträglich auf einen bestehenden Einlaufklappen-Grundkörper aufgesetzt und mit diesem fest verbunden wird. Die Verbindung kann unlösbar durch beispielsweise eine Schweiß-, Klebe- oder Nietverbindung sein, oder aber lösbar, durch beispielsweise eine Schraubverbindung oder eine Schnappverbindung.

Das Verbindungsteil kann dabei für jeden bestehenden Einlaufklappen-Grundkörper-Typ mit einem passenden Anschlussbereich versehen werden, so dass es auch bei Flugzeugen, die bereits in Betrieb sind, einsetzbar ist.

Schließlich betrifft die Erfindung ein Triebwerk mit einer insbesondere schnell laufenden Turbine, einer Triebwerksumwandung und wenigstens einer vorbeschriebenen Triebwerksklappe. Entlang des Umfangs der Triebwerksumwandung können nebeneinander mehrer Triebwerksklappen angeordnet sein, die in Anhängigkeit von der benötigten Triebwerksleistung mittels einer Steuerung einzeln oder gemeinsam geöffnet und/oder geschlossen werden können. Dabei ist die Seite des Verlängerungsteils, die bei geschlossener Triebwerksklappe der Triebwerksumwandung am nächsten ist, eine Unterseite des Verlängerungsteils, die der Triebwerksumwandung in diesem Fall abgewandte Seite ist die Oberseite.

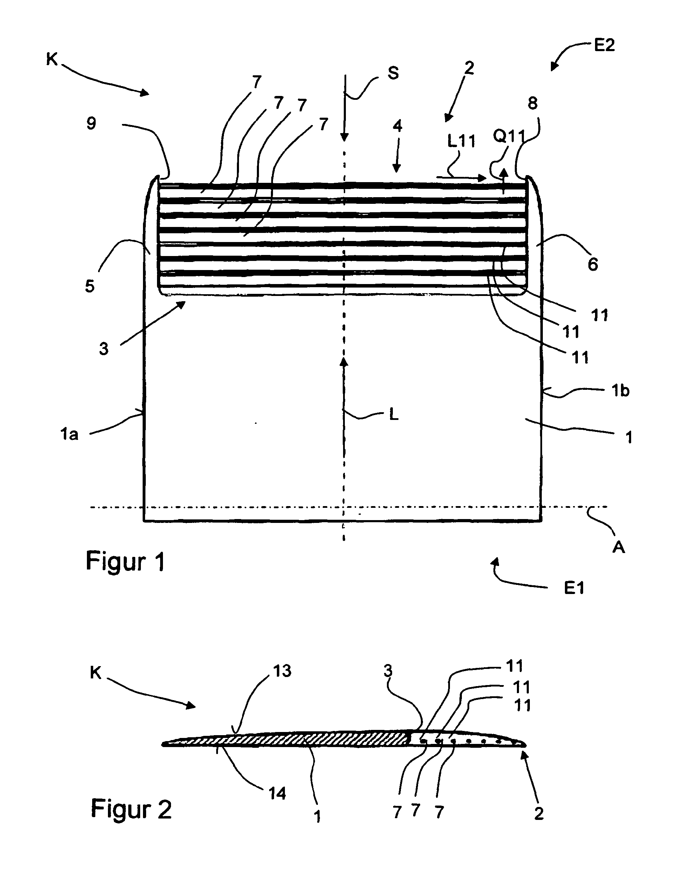

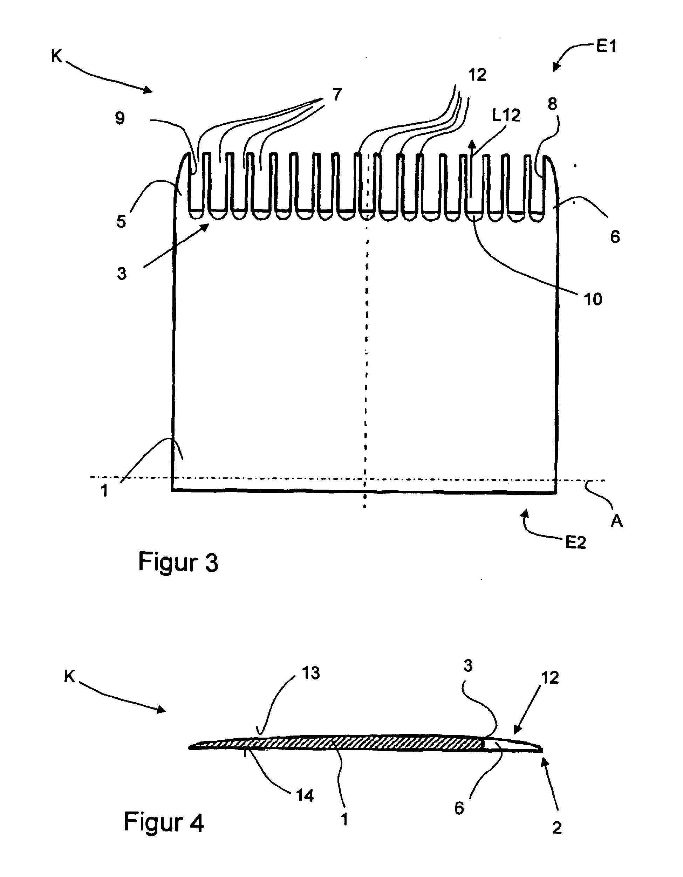

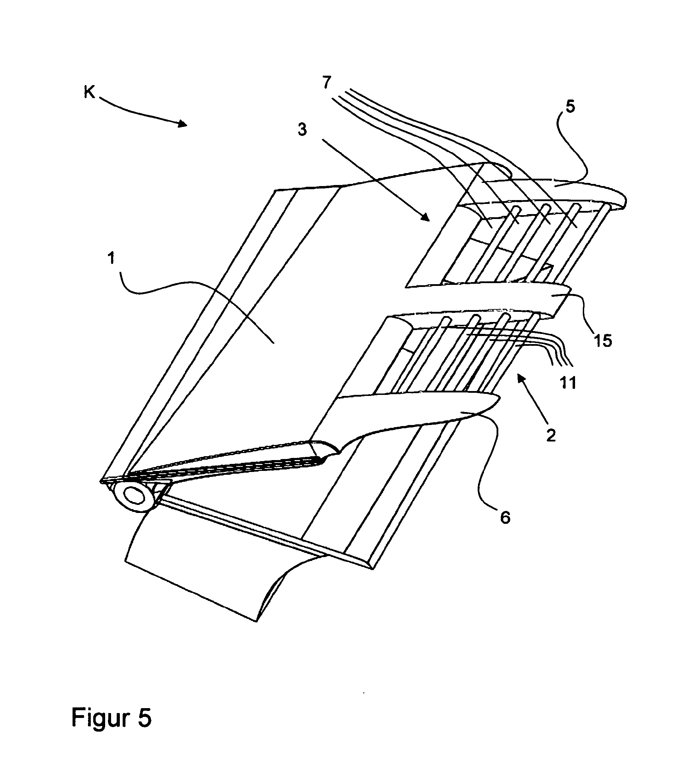

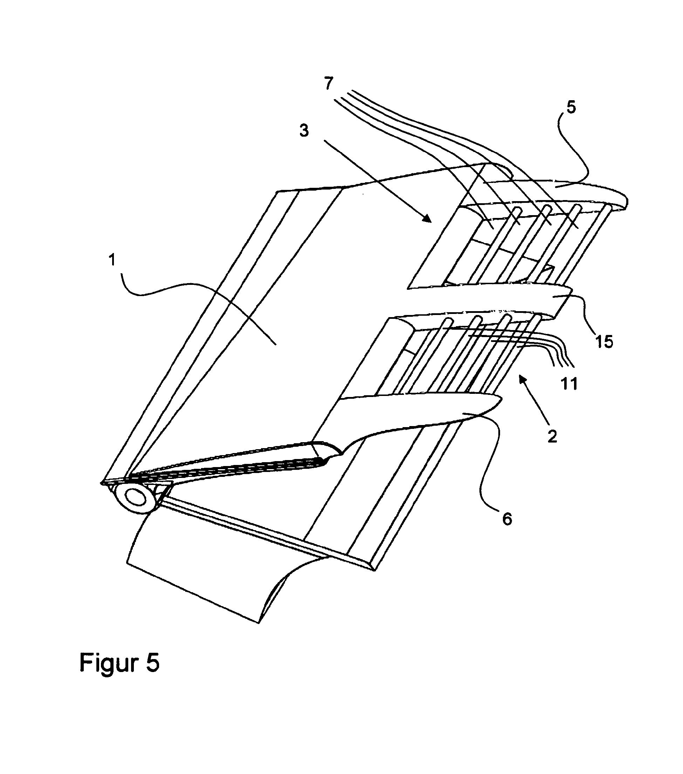

Im Folgenden werden Ausführungsbeispiele der Erfindung an Hand der beigefügten Figuren beschrieben. Diese zeigen im Einzelnen:
■ Figur 1 eine Draufsicht eines ersten Ausführungsbeispiels der erfindungsgemäßen Einlaufklappe mit einem Grundkörper und einem einstückig an diesem angebrachten Verlängerungsteil mit Querstreben,
■ Figur 2 einen Seitenschnitt durch die Einlaufklappe der Figur 1,
■ Figur 3 eine Draufsicht eines weiteren Ausführungsbeispiels der erfindungsgemäßen Einlaufklappe mit einem Grundkörper und einem einstückig an diesem angebrachten Verlängerungsteil mit Längsstreben in einer Draufsicht,
■ Figur 4 einen Schnitt durch die Einlaufklappe der Figur 3,
■ Figur 5 eine perspektivische Darstellung eines weiteren Ausführungsbeispiels der erfindungsgemäßen Einlaufklappe mit einem Einlaufklappen-Grundkörper und einem daran angebrachten Verlängerungsteil mit Querstreben in einer perspektivischen Sicht

Die Figur 1 zeigt eine Sicht von oben auf eine Einlaufklappe eines Flugzeugtriebwerkes, losgelöst vom Triebwerk in einer Grundform. Die erfindungsgemäße Einlaufklappe K und insbesondere die Mehrzahl von Einlaufklappen für ein Triebwerk ist bzw. sind zur Anbringung an dem Gehäuse eines Lufteinlasses oder eines Lufteinlaufkanals oder einer Umwandung eines Triebwerks eines Flugzeugs vorgesehen. Die Einlaufklappe K ist zur Anbringung an dem vorderen, d.h. bei dem bestimmungsgemäßen Einsatz der Strömung zugewandten Randbereich des Einlaufs oder des Einlaufkanals vorgesehen. Das Gehäuse kann bei einem in die Flugzeugsstruktur eingebauten Triebwerk die Flugzeug-Teilstruktur, in den der Einlaufkanal integriert ist, oder das Gehäuse eines externen Triebwerks sein. Der Randbereich ist derjenige in der Flugzeug-Längsachse gesehen vorderste Strukturbereich, an dem die Einlauf in die Struktur oder in das Triebwerks-Gehäuse einmündet. Der genaue Ort der Anbringung der erfindungsgemäß vorgesehenen Einlaufklappe K erfolgt nach einer speziellen aerodynamischen und belastungsmechanischen Auslegung aufgrund für den jeweiligen Einzelfall. Die Triebwerks-Einlaufklappe K ist aus einem Einlaufklappen-Grundkörper 1 und einem Einlaufklappen-Verlängerungsteil 2 gebildet. Das Einlaufklappen-Verlängerungsteil 2 ist mit dem Einlaufklappen-Grundkörper 1 strukturell integriert, das heißt, dass diese Einlaufklappen-Grundkörper 1 und das Einlaufklappen-Verlängerungsteil 2 einstückig gefertigt oder dass das Einlaufklappen-Verlängerungsteil 2 als ein auf dem Einlaufklappen-Grundkörper 1 aufsetzbares Bauteil auf dem Einlaufklappen-Grundkörper 1 montiert sein kann.

Die erfindungsgemäße Triebwerks-Einlaufklappe K ist zur Anbringung an dem Gehäuse eines Lufteinlasses oder Lufteinlaufkanals eines Triebwerks eines Flugzeugs vorgesehen und weist ein erstes Ende E1 und ein entgegengesetzt zu diesem gelegenes und in der Längsrichtung L der Einlaufklappe K beabstandetes zweites Ende E2 auf. Die Längsrichtung L ist dabei bei dem bestimmungsgemäßen Einsatz der Triebwerks-Einlaufklappe K zur Anbringung an dem Gehäuse eines Lufteinlasses oder Lufteinlaufkanals entgegen die Strömungsrichtung S der in das Triebwerk fließenden Luft gerichtet. Die Einlaufklappe K weist einen Einlaufklappen-Grundkörper 1 mit einer Anschlussvorrichtung für eine Gelenkverbindung zur gelenkigen Verbindung des Einlaufklappen-Grundkörpers 1 an dem Gehäuse des Lufteinlasses oder Lufteinlaufkanals mit einer entlang dem zweiten Ende E2 verlaufenden Drehachse A auf.

Die Triebwerks-Einlaufklappe K weist weiterhin ein mit dem Einlaufklappen-Grundkörper 1 strukturell integriertes Einlaufklappen-Verlängerungsteil 2 auf, das ein erstes und ein zweites Seitenteil 5, 6 aufweist, das sich jeweils an den zwei entgegen gesetzt zueinander gelegenen und in der Längsrichtung L verlaufenden Seitenrändern 1a, 1 b der Einlaufklappe K von dem Einlaufklappen-Grundkörper 1 aus erstreckt,

Bei dem in den Figuren 1 und 2 gezeigten Ausführungsbeispiel weist das Einlaufklappen-Verlängerungsteil 2 eine Mehrzahl von Querstreben 11 auf, die an den Seitenteilen 5, 6 angeordnet sind und quer zur Längsrichtung (L) zwischen diesen verlaufen, so dass diese zwischen einer dritten Seitenwand oder einem ersten Seitenteil 5 in Form eines seitlichen Verlängerungsteils und der vierten Seitenwand oder einem zweiten Seitenteil 6 in Form eines weiteren seitlichen Verlängerungsteils der Verlängerung 2 gebildet sind.

Dadurch bilden sich zwischen den Querstreben 11 Ausnehmungen 7 aus. Die Ausnehmungen 7 verlaufen zwischen zwei einander zugewandten Innenseiten 8, 9 der Seitenteile 5 bzw. 6, die jeweils auf den einander zugewandten Innenseiten der Verlängerungsteils bzw. entlang der dritten und vierten Seitenwand 5, 6 verlaufen, und einen die inneren Enden der Innenseiten verbindenden Rand aufweist.

Die integrierte Verlängerung 2 kann mit einer ersten Seitenwand 3 mit dem Einlaufklappen-Grundkörper 1 unlösbar so verbunden sein, dass der Einlaufklappen-Grundkörper 1 und die Verlängerung 2 optisch eine einheitliche Einlaufklappe bilden. Dabei können der Einlaufklappen-Grundkörper 1 und die dritte und vierte Seitenwand 5, 6 eine gemeinsame Umhüllende mit einer einheitlichen Krümmung entlang der Richtungen von deren flächigen Erstreckung bilden. Weiterhin weist die Verlängerung 2 einen zweiten, dem ersten Seitenrand 3 entgegengesetzt und in Längsrichtung des Verlängerungsteils 2 beabstandet zu diesem gelegenen Seitenrand 4 auf. Insbesondere kann das Einlaufklappen-Verlängerungsteil 2 als ein auf dem Einlaufklappen-Grundkörper 1 aufsetzbares Bauteil auf dem Einlaufklappen-Grundkörper 1 montiert sein.

Die Querstreben 11 können mit der Seitenwand oder den Seitenteilen 5, 6 verbunden sein. Dazu können die Querstreben 11 als separate Teile hergestellt und nachträglich mit der Verlängerung 2 in der dritten und vierten Seitenwand 5, 6 verbunden sein. Die Querstreben 11 können aber auch in einem Stück mit der Verlängerung 2, bzw. mit einer Oberfläche der Verlängerung 2 gebildet sein, wobei nachträglich mittels bekannter Schneidverfahren die Ausnehmungen 7 in die Verlängerung 2 geschnitten werden. Schneideverfahren, die geeignet sind, sind zum Beispiel Laserschneidverfahren.

Sind die Querstreben 11 als separate Teile hergestellt, so können sie mit dem Verlängerungsteil 2 fest, das heißt relativ zum Verlängerungsteil 2 nicht bewegbar verbunden sein. Die Querstreben 11 können aber auch beweglich mit dem Verlängerungsteil 2 verbunden sein, wobei bewegbar in diesem Zusammenhang bedeutet, dass die Querstreben 11 in der nach innen gerichteten Seitenwand des ersten Seitenteils 5 und/oder in der nach innen gerichteten Seitenwand des zweiten Seitenteils 6 schwenkbar gelagert sind, wobei der maximale Winkel um den die Querstreben 11 verschwenkt werden können, konstruktiv vorgegeben ist. Diese bewegbare Lagerung der Querstreben 11 in den Seitenwänden 5, 6 ist derart ausgeführt, dass die Querstreben 11 durch die im Fluge und der Strömung S auftretenden Strömungskräfte der anströmenden Luft verstellt werden können, um beispielsweise in Abhängigkeit von dem Öffnungsgrad der Luftklappe den Luftwiderstand der Querstreben 11 möglichst niedrig zu halten oder das Strömungsverhalten der Strömung S zu optimieren.

Die bewegbaren Querstreben 11 können beispielsweise durch eine nicht gezeigte Feder in der Ruhestellung vorgespannt sein, so dass sie nach einer Verschwenkung beim Nachlassen der angreifenden Strömungskräfte wieder in ihre Ruhestellung zurückkehren können.

Die Querstreben 11 können fest oder schwenkbar mit dem Verlängerungsteil 2 verbunden sein. Zu diesem Zweck können diese aus einem elastischen, flexiblen Material gebildet sein oder ein solches Material aufweisen, so dass sie sich durch die angreifenden Strömungskräfte verwinden können, um den Luftwiderstand wie oben beschrieben zu minimieren oder den im Einlauf vorliegenden Strömungszustand zu optimieren. Zusätzlich kann durch dieses Verwinden einem Aufbau von Eis an den Querstreben 11 entgegengewirkt werden, indem die Querstreben 11 das Eis durch die Ausnehmungen 7 weg vom Lufteinlass leiten, und das Eis durch die Verwindung der Querstreben 11 von der Oberfläche der Querstreben 11 gelöst, beispielsweise abgesprengt wird. Dadurch kann allein durch konstruktive Maßnahmen eine zuverlässige Enteisung der Einlaufklappe bzw. des Einlaufbereiches erreicht werden, ohne externe Energieversorgung, ohne Einsatz eines Controllers und/oder Detektors zum Detektieren von Eisbildung in diesem Bereich.

Die Querstreben 11 können dabei über ihren Verlauf, und zwar in Längsrichtung L11 und in Querrichtung Q11, eine gleichbleibende Materialdicke aufweisen, das heißt die Form eines flachen Rechteckstabes haben. Die Materialdicke kann aber auch variieren, so dass beispielsweise jede der Querstreben 11 die Form eines Flügels aufweist oder mit einer spitzen Längskante in die Strömung S hinreicht. Die Querstreben können Hohlkörper, kompakte Körper aus einem Material oder aus mehreren Materialien aufgebaute Körper mit oder ohne Hohlraum sein. Eine aus mehreren Materialien aufgebaute Querstrebe könnte beispielsweise einen harten Kern und eine dazu relativ weiche Außenhaut aufweisen, die sich in der Strömung verwinden kann. Zusätzlich zu der Verwindung können die Querstreben 11 egal welcher Bauart durch die angreifenden Strömungskräfte auch in Vibration versetzt werden, was zusätzlich der Eisbildung an den Streben entgegenwirkt.

In Figur 2 ist die Einlaufklappe K der Figur 1 von der Seite in einer Schnittansicht dargestellt. Zu erkennen ist der Einlaufklappen-Grundkörper 1 und das integrierte Verlängerungsteil 2 mit den Querstreben 11. Der Einlaufklappen-Grundkörper 1 und das Verlängerungsteil 2 mit dem ersten Seitenteil 5 und dem zweiten Seitenteil 6 bilden eine gemeinsame Oberfläche 13 mit einer in der Längsrichtung L verlaufenden einheitlichen, d.h. sich nicht ändernden Krümmung und eine gemeinsame Unterseite 14 der Einlaufklappe K. Dabei ist die Unterseite 14 die Seite der Einlaufklappe, die dem Triebwerkseinlauf zugewandt ist.

In Figur 3 ist ein weiteres Ausführungsbeispiel der erfindungsgemäßen Triebwerks-Einlaufklappe K oder des Verlängerungsteils 2 dargestellt. Die Triebwerks-Einlaufklappe K weist eine Mehrzahl von Längsstreben 12 auf, die an dem Einlaufklappen-Grundkörper 1 angeordnet sind und sich jeweils in der Längsrichtung L der Einlaufklappe K erstrecken. Zwischen den Längsstreben 12 bilden sich somit Ausnehmungen 7 aus. Die Längsstreben 12 können in einem Stück mit dem Verlängerungsteil 2 gebildet sein, sie können aber auch separate Teile sein, die mit dem Verlängerungsteil 2 verbunden werden, beispielsweise verklebt, verschweißt oder durch Niete oder Schrauben verbunden. Im Ausführungsbeispiel sind die Längstreben 12 als einstückig mit dem Verlängerungsteil 2 gebildet gezeigt. Diese Ausführungsform bietet den Vorteil, dass zwischen den Längsstreben 12 und dem Verlängerungsteil 2 keine Naht besteht, die zu Verwirbelungen der vorbeiströmenden Luft in diesem Bereich führen könnte.

Die Längsstreben 12 können durch die im Fluge angreifenden Strömungskräfte in Vibration versetzt werden und dadurch, ähnlich wie die vorbeschriebenen Querstreben 11, einer Eisbildung entgegenwirken und/oder bereits gebildetes Eis lösen.

Wie die Querstreben 11 in Figur 1 sind die Längsstreben 12 der Verlängerung 2 zwischen einer dritten Seitenwand 5 und einer vierten Seitenwand 6 gebildet. Da bei dieser Ausführungsform die Seitenwände 5, 6 aber nicht zur Lagerung oder Befestigung der Längsstreben 12 benötigt werden, können sie selbst auch Längsstreben 12 bilden.

Die Längsstreben 12 können in Längsrichtung und Querrichtung durchgebend eine gleichmäßige Materialdicke aufweisen, sie können aber auch sich verändernde Materialdicken aufweisen, beispielsweise mit einer größeren Materialdicke im Bereich des Übergangs der Längsstrebe 12 in das Verlängerungsteil 2 und einer kleineren Materialdicke an der Spitze. Dadurch würden bei angreifenden Strömungskräften zunächst die Spitzen der Längsstreben 12 in Vibration versetzt, und die Eisbildung könnte gerade in diesem kritischen Bereich zuverlässig verhindert werden.

Im Übergang der Längsstreben 12 in das Verbindungsteil 2 ist zwischen je zwei Längsstreben je eine Ausnehmungsrückwand 10 gebildet. Dieser Übergang kann abrupt als Stufe ausgebildet sein, was aber zu einer Verwirbelung der Luftströmung in diesem Bereich führen könnte. Um diese Verwirbelung der Luft zu vermeiden, kann der Übergang kontinuierlich verlaufen, so dass die Luft weitestgehend störungsfrei strömen kann.

In der Seitenansicht in Figur 4 ist zu erkennen, dass die Längsstreben 12 so gebildet sein können, dass sie eine Fortsetzung der Oberfläche des Einlaufklappen-Grundkörpers 1 bilden, so dass die Einlaufklappe, die aus Einlaufklappen-Grundkörper 1 und Verlängerungsteil 2 gebildet ist, von der Seite eine geschlossene Form aufweisen, mit einer kontinuierlichen Oberfläche 13 und einer durchgehenden Unterseite 14.

Ein drittes Ausführungsbeispiel des erfindungsgemäßen Verlängerungsteils 2 ist in Figur 5 gezeigt, bei dem zwischen den Seitenteilen 5, 6 zumindest ein an dem Einlaufklappen-Grundkörper 1 angeordneter und sich in der Längsrichtung L erstreckender Längssteg 15 angeordnet ist und zwischen jeweils einem Seitenteil 5, 6 und einem Längssteg 15 oder zwischen zwei Längsstegen 15 eine Mehrzahl von Querstreben 11 verläuft. Das Verlängerungsteil 2 kann insbesondere ein separates Bauteil sein, das mit einem bestehenden Einlaufklappen-Grundkörper 2 nachträglich verbunden oder montiert werden kann.

Das Verlängerungsteil 2 ist an einem ersten Seitenrand 3 mit dem Einlaufklappen-Grundkörper 2, der hier gleich der bauseitig vorgesehenen Einlaufklappe ist, verbunden oder verbindbar. Die Verbindung zwischen Einlaufklappen-Grundkörper 1 und Verlängerungsteil 2 ist derart vorgesehen, dass sich das Verlängerungsteil 2 relativ zum Einlaufklappen-Grundkörper 1 nicht bewegen kann. Diese Verbindung kann durch mechanische Verbindungen, wie Niete oder Schrauben hergestellt werden. Das Verlängerungsteil 2 kann mit dem Einlaufklappen-Grundkörper aber auch durch eine Klebe- oder Schweißverbindung verbunden sein. Um dabei die nötige Stabilität der Verbindung sicher zu stellen, kann das Verlängerungsteil 2 beispielsweise einen in Figur 5 schematisch gezeigten oder anders gestalteten Verbindungsabschnitt aufweisen, der sich an die erste Seitenwand anschließt und zur Verbindung des Verbindungsteils 2 mit dem Einlaufklappen-Grundkörper 1 mit dessen Unterseite 14 verklebt werden kann. Dabei kann das Verbindungsteil maximal die gleichen Maße in Länge und Breite aufweisen wie die Unterseite 14 des Einlaufklappen-Grundkörpers 1, sie kann aber die Unterseite 14 auch nur teilweise bedecken.

Obwohl in der Figur 5 das separat gebaute und nachträglich mit dem Einlaufklappen-Grundkörper 1 verbundene Verlängerungsteil 1 mit Querstreben 11 gezeigt ist, kann es ebenso Längsstreben 12 aufweisen. In der gezeigten Ausführung weist das Verbindungsteil 2 im Bereich der Querstreben, mittig zwischen der dritten Seitenwand 5 und der vierten Seitenwand 6 angeordnet, einen Längssteg 15 auf. Obwohl in Figur 5 nur einen zusätzlichen Steg 15 gezeigt ist, können auch mehrere Stege 15 nebeneinander angeordnet sein. Die Stege 15 dienen dazu, die Querstreben 11 zu stützen und so einem Verbiegen der Querstreben 11 vorzubeugen. Je nach Länge der Querstreben kann dazu ein Längssteg 15 genügen.

Die Querstreben können eine Länge aufweisen, die dem Abstand zwischen einer der Seitenwände 5, 6 bis zu dem nächstliegenden Steg 15, und bei mehreren Stegen 15 dem Abstand zwischen zwei Stegen 15 entsprechen. Das heißt, dass in diesem Fall eine Querstrebe 11 aus mehreren Teil-Querstreben gebildet ist. Die dadurch relativ kurzen Teil-Querstreben können relativ verwindungssteif sein oder ihr Material und die Materialdicke sind so gewählt, dass sie trotz der relativ geringen Länge noch genügend Flexibilität aufweisen, um durch die angreifende Luftströmung verformt zu werden und so dem Eisansatz entgegenwirken. Die Teil-Querstreben können wie zu Figur 1 beschrieben verschwenkbar in den Seitenwänden 5, 6 und/oder Längsstegen 15 gelagert oder fest mit diesen Verbunden sein. Auch eine einstückige Herstellung aus beispielsweise Verbundmaterial ist denkbar.

Der oder die Längssteg/e 15 kann/können auch so gebildet sein, dass er/sie Durchgänge für die Querstreben 11 bildet/n. Das heißt, die Querstreben 12 sind nur in der dritten Seitenwand 5 und der vierten Seitenwand 6 gelagert oder mit diesen fest verbunden und reichen durch Öffnungen in den Längsstegen 15. Dabei wird die Stabilität der Querstreben 12 gegen ein Verbiegen erhöht, die Querstreben werden im Bereich der Längsstege zusätzlich geführt.

Die Öffnungen in den Längsstegen 15 können einen Durchmesser haben, der es den Querstreben 12 erlaubt, um ihre Längsachse zu verdrehen. Die Öffnungen können aber auch so gestaltet sein, dass sie im Durchgangsbereich der Querstreben 11 durch die Längsstege 15 die Freiheit der Bewegung der Querstreben 11 einschränken.

Die Querstreben 11 können aber auch auf dem ersten Seitenteil 5, dem zweiten Seitenteil 6 und dem Längssteg 15 bzw. den Längsstegen 15 aufliegen und von oben, d.h. an der Oberseite 13 mit diesen verbunden sein. Auch können die Querstreben 11 von unten, d.h. an der Unterseite 14 mit den Seitenwänden 5, 6 und dem Steg 15 verbunden sein. Wichtig ist bei allen Verbindungsvarianten, dass die Querstreben 11 und/oder Teil-Querstreben noch genügend Flexibilität aufweisen, um Eisbildung durch Verwindung und/oder Vibration vorzubeugen und/oder entgegenzuwirken. Alles was zu den Figuren 1 bis 4 gesagt worden ist, gilt sinngemäß auch für das Ausführungsbeispiel in Figur 5.

Generell können die Triebwerks-Einlaufklappen K an einem Gehäuse des Triebwerks (nicht dargestellt) angelenkt und mittels jeweils eines Stellantriebs oder mittels eines gemeinsamen Stellantriebs, der über eine Kopplungsvorrichtung auf die Triebwerks-Einlaufklappen K wirkt, verstellbar sein. Erfindungsgemäß ist ein Triebwerk mit Triebwerks-Einlaufklappen vorgesehen, an denen jeweils zumindest ein Stellantrieb zur Verstellung der jeweiligen Triebwerks-Einlaufklappe um deren Drehachse angeordnet ist, wobei das Triebwerk eine Ansteuerungsvorrichtung aufweist, die eine Ansteuerungsfunktion mit einer Schnittstelle zu einem Flugführungssystem und/oder einem Triebswerkssteuerungssystem aufweist und die derart ausgeführt ist, dass diese auf den Empfang von Luftdaten von dem Flugführungssystem und/oder einer aktuellen oder geforderten Triebwerksleistung von dem Flugführungssystem und/oder dem Triebwerkssteuerungssystem Kommandosignale zur Kommandierung der Stellantriebe der Triebwerks-Einlaufklappen erzeugt und an die die Stellantriebe der Triebwerks-Einlaufklappen sendet, um die Triebwerks-Einlaufklappen um ihre Drehachse (A) zur Einstellung der Strömung im Einlauf zu verstellen.

Die erfindungsgemäßen Ausführungsbeispiele sind generell für Triebwerke an einem Flugzeug vorgesehen. Durch die Einstellung der erfindungsgemäß am Triebwerksgehäuse vorgesehenen Triebwerksklappen K wird eine Optimierung der Einlaufströmung, eine Verringerung des Luftwiderstand des Triebwerk- bzw. Einlauf-Gehäuses sowie eine Minimierung der Beeinflussung der Triebwerksleistung durch Einsansatz am Triebwerk- bzw. Einlauf-Gehäuse erreicht. Die Erzeugung der Kommandosignale durch die Ansteuerungsvorrichtung kann auf der Basis von Wertetabellen oder Kalibrierungstabellen erfolgen, in der den genannten Sensorwerten oder einer Auswahl oder einer Kombination derselben ein Kommandosignalwert oder ein Wert, wie z.B. ein normierte Wert oder ein Verstellwert für den Aktuator, aus dem ein Kommandosignalwert abgeleitet werden kann, zugeordnet ist. In letzterem Fall weist die Ansteuerungsfunktion eine entsprechende Funktion zur Ableitung des Kommandosignalwerts auf.

Nach einem weiteren Ausführungsbeispiel der Erfindung ist das Triebwerk ein Triebwerk oder eine Auxillary Power Unit (auch kurz APU genannt), die nur zeitweise und im Flug insbesondere bei Leistungseinbussen von einem oder mehreren Haupttriebwerken zur Bereitstellung einer Not-Energieversorgungsleistung aktiviert wird. Erfindungsgemäß ist für diesen Anwendungsfall ein Flugzeugsystem vorgesehen, das ein Triebwerk nach einer Ausführungsform der Erfindung und eine Energieversorgungsvorrichtung aufweist. Die Ansteuerungsfunktion weist insbesondere zusätzlich zu den Funktionen nach den vorgenannten Ausführungsbeispielen eine Funktion auf, mit der die Klappen zwischen einer Abdeckungsstellung, bei der der Durchsatz der Einlaufströmung minimal ist, und einer offenen Stellung, bei der der Durchsatz der Einlaufströmung maximal ist, bewegt werden können. Die Energieversorgungs-Vorrichtung kann insbesondere eine Funktion aufweisen, die ein Kommandosignal an die Ansteuerungsfunktion zum Bewegen oder Halten der Triebwerks-Einlaufklappen K in ihrer Abdeckungsstellung sendet, wenn sich die Energieversorgungsvorrichtung in einem fehlerfreien Betrieb befindet, und/oder die ein Kommandosignal an die Ansteuerungsfunktion zum Bewegen der Triebwerks-Einlaufklappen K in ihrer offenen Stellung sendet, wenn sich die Energieversorgungsvorrichtung das Hilfstriebwerk aktiviert. Das Hilfstriebwerk kann insbesondere bei der Ermittlung oder Erfassung einer Leistungseinbuße von zumindest einem Haupttriebwerk durch die Energieversorgungsvorrichtung erfolgen. Auch kann vorgesehen sein, dass das Triebwerkssystem eine jeweils auftretende Leistungseinbuße erfasst und das Triebwerkssystem ein Kommandosignal an die Ansteuerungsvorrichtung zum Bewegen der -Einlaufklappen K in ihre offene Stellung senden.

Die erfindungsgemäß vorgesehene Ansteuerungsvorrichtung zur Bewegung oder Betätigung der -Einlaufklappen K kann insbesondere funktionaler Bestandteil der Flugsteuerungsvorrichtung und/oder des Triebwerkssystems zur Steuerung und Regelung der Flugzeug-Triebwerke sein.

### Bezunszeichenliste

- 1: Einlaufklappen-Grundkörper
- 1 a: erster Seitenrand
- 1 b: zweiter Seitenrand
- 2: Einlaufklappen-Verlängerungsteil
- 3: erster Seitenrand des Einlaufklappen-Verfängerungsteils 2
- 4: zweiter Seitenrand des Einlauflclappen-Verlängerungsteils 2
- 5: erstes Seitenteil
- 6: zweites Seitenteil
- 7: Ausnehmung
- 8: Innenseite
- 9: Innenseite
- 10: Ausnehmungsrückrand
- 11: Querstrebe
- 12: Längsstrebe
- 13: Oberseite
- 14: Unterseite
- 15: Längssteg
- A: Drehachse
- E1: erstes Ende der Triebwerks-Einlaufklappe K
- E2: zweites Ende der Triebwerks-Einlaufklappe K
- K: Triebwerks-Einlaufklappe
- L: Längsrichtung der Triebwerks-Einlaufklappe K
- L11: Längsrichtung der Querstreben 11
- L12: Längsrichtung
- Q11: Querrichtung der Querstreben 11
- S: Strömungsrichtung

## Patentansprüche

1. Triebwerks-Einlaufklappe (K) zur Anbringung an einem Gehäuse eines Lufteinlasses oder Lufteinlaufkanals eines Triebwerks eines Flugzeugs, mit einem ersten Ende (E1) und einem entgegengesetzt zu diesem gelegenen und in eine Längsrichtung (L) der Einlaufklappe beabstandeten zweiten Ende (E2), wobei die Längsrichtung (L) bei dem bestimmungsgemäßen Einsatz entgegen die Strömungsrichtung (S) der in das Triebwerk fließenden Luft gerichtet ist, aufweisend:
■ einen Einlaufklappen-Grundkörper (1) mit einer Anschlussvorrichtung für eine Gelenkverbindung zur gelenkigen Verbindung des Einlaufklappen-Grundkörpers (1) an dem Gehäuse des Lufteinlasses oder Lufteinlaufkanals mit einer entlang dem zweiten Ende (E2) verlaufenden Drehachse (A),
und **gekennzeichnet durch**
■ ein mit dem Einlaufklappen-Grundkörper (1) strukturell integriertes Einlaufklappen-Verlängerungsteil (2), das ein erstes und ein zweites Seitenteil (5, 6) aufweist, das sich jeweils an den zwei entgegen gesetzt zueinander gelegenen und in der Längsrichtung (L) verlaufenden Seitenrändern (1 a, 1 b) der Einlaufklappe (K) von dem Einlaufklappen-Grundkörper (1) aus erstreckt, mit einer Mehrzahl von Querstreben (11), die an den Seitenteilen (5, 6) angeordnet sind und quer zur Längsrichtung (L) zwischen diesen verlaufen.

2. Triebwerks-Einlaufklappe (K) nach dem Anspruch 1, **dadurch gekennzeichnet, dass** das Einlaufklappen-Verlängerungsteil (2) als ein auf dem Einlaufklappen-Grundkörper (1) aufsetzbares Bauteil auf dem Einlaufklappen-Grundkörper (1) montiert ist.

3. Triebwerkseinlaufklappe nach einem der voranstehenden Ansprüche, **dadurch gekennzeichnet, dass** zumindest ein Teil der Querstreben (11) an den Seitenteilen (5, 6) um ihre Längsachse (L11) drehbar angeordnet sind.

4. Triebwerks-Einlaufklappe (K) nach einem der voranstehenden Ansprüche, **dadurch gekennzeichnet, dass** die Querschnitte der Querstreben (11) eine Flügelform haben und dass zumindest ein Teil der Querstreben (11) in eine Ausgangsstellung federnd vorgespannt sind.

5. Triebwerks-Einlaufklappe (K) nach einem der voranstehenden Ansprüche, **dadurch gekennzeichnet, dass** die Querstreben (11) aus elastischem Material gebildet sind, bei dem diese sich bei den bestimmungsgemäß auftretenden und entlang der Längsrichtung (L) strömenden Luftströmung (S) in einem Maße biegen und/oder verwinden dermaßen, dass eine auf den Querstreben (11) gebildete Eisschicht abgesprengt werden kann.

6. Triebwerks-Einlaufklappe (K) zur Anbringung an dem Gehäuse eines Lufteinlasses oder Lufteinlaufkanals eines Triebwerks eines Flugzeugs, mit einem ersten Ende (E1) und einem entgegengesetzt zu diesem gelegenen und in der Längsrichtung (L) der Einlaufklappe beabstandeten zweiten Ende (E2), wobei die Längsrichtung (L) bei dem bestimmungsgemäßen Einsatz entgegen die Strömungsrichtung (S) der in das Triebwerk fließenden Luft gerichtet ist, aufweisend:
■ einen Einlaufklappen-Grundkörper (1) mit einer Anschlussvorrichtung für eine Gelenkverbindung zur gelenkigen Verbindung des Einlaufklappen-Grundkörpers (1) an dem Gehäuse des Lufteinlasses oder Lufteinlaufkanals mit einer entlang dem zweiten Ende (E2) verlaufenden Drehachse (A),
und **gekennzeichnet durch**
■ ein mit dem Einlaufklappen-Grundkörper (1) strukturell integriertes Einlaufklappen-Verlängerungsteil (2), das ein erstes und ein zweites Seitenteil (5, 6) aufweist, das sich jeweils an den zwei entgegen gesetzt zueinander gelegenen und in der Längsrichtung (L) verlaufenden Seitenrändern (5, 6) der Einlaufklappe (K) von dem Einlaufklappen-Grundkörper (1) aus erstreckt,
■ mit einer Mehrzahl von Längsstreben (12), die an dem Einlaufklappen-Grundkörper (1) angeordnet sind und sich jeweils in der Längsrichtung (L) der Einlaufklappe (K) erstrecken.

7. Triebwerks-Einlaufklappe (K) nach dem Anspruch 6, **dadurch gekennzeichnet, dass** das Einlaufklappen-Verlängerungsteil (2) als ein auf dem Einlaufklappen-Grundkörper (1) aufsetzbares Bauteil auf dem Einlaufklappen-Grundkörper (1) montiert ist.

8. Triebwerks-Einlaufklappe (K) nach einem der voranstehenden Ansprüche 6 bis 7, **dadurch gekennzeichnet, dass** die Längsstreben (12) aus elastischem Material gebildet sind, bei dem diese sich bei den bestimmungsgemäß auftretenden und entlang der Längsrichtung (L) strömenden Luftströmung (S) in einem Maße biegen und/oder verwinden dermaßen, dass eine auf den Querstreben (11) gebildete Eisschicht abgesprengt werden kann.

9. Triebwerk, mit einem von einem Triebwerksgehäuse gebildeten Lufteinlauf, wobei an dem der bestimmungsgemäß vorliegenden Luftströmung (S) entgegen gerichteten vorderen Randbereich wenigstens eine Triebwerks-Einlaufklappe (K) nach einem der Ansprüche 1 bis 8 angeordnet ist.

10. Triebwerk nach dem Anspruch 9, **dadurch gekennzeichnet, dass** in der Strömungsrichtung (S) gesehen entlang des Umfangs des Triebwerksgehäuses mehrere der Triebwerks-Einlaufklappen (K) nebeneinander angeordnet sind, und dass an den Triebwerks-Einlaufklappen (K) jeweils zumindest ein Stellantrieb zur Verstellung der jeweiligen Triebwerks-Einlaufklappe (K) um deren Drehachse (A) angeordnet ist, dass das Triebwerk eine Ansteuerungsvorrichtung aufweist, die eine Ansteuerungsfunktion mit einer Schnittstelle zu einem Flugführungssystem und/oder einem Triebswerkssteuerungssystem aufweist und die derart ausgeführt ist, dass diese auf den Empfang von Luftdaten von dem Flugführungssystem und/oder einer aktuellen oder geforderten Triebwerksleistung von dem Flugführungssystem und/oder dem Triebwerkssteuerungssystem Kommandosignale zur Kommandierung der Stellantriebe der Triebwerks-Einlaufklappen (K) erzeugt und an die die Stellantriebe der Triebwerks-Einlaufklappen (K) sendet, um die Triebwerks-Einlaufklappen (K) um ihre Drehachse (A) zur Einstellung der Strömung im Einlauf zu verstellen.

11. Triebwerk nach dem Anspruch 10, **dadurch gekennzeichnet, dass** bei der Ausgestaltung der Triebwerks-Einlaufklappen (K) mit um ihre Längsachse drehbaren Längsstreben Aktuatoren an zumindest einem Teil der Längsstreben zur Veränderung der Drehstellung der Querstreben (11) angekoppelt sind, dass das Triebwerk eine Ansteuerungsvorrichtung aufweist, die eine Ansteuerungsfunktion mit einer Schnittstelle zu einem Flugführungssystem und/oder eine Triebwerkssteuerungssystem aufweist und die derart ausgeführt ist, dass diese auf den Empfang von Luftdaten von dem Flugführungssystem und/oder einer aktuellen oder geforderten Triebwerksleistung von dem Flugführungssystem und/oder dem Triebswerkssteuerungssystem die Stellantriebe zur Veränderung der Drehstellung der Querstreben (11) ansteuern kann, um die Querstreben (11) um ihre Längsachse (L11) zur Einstellung der Strömung im Einlauf zu verstellen.

12. Triebwerk nach dem Anspruch 10 oder 11, **dadurch gekennzeichnet, dass** die Ansteuerungsfunktion derart ausgeführt ist, dass diese als Luftdaten die Strömungsgeschwindigkeit des Flugzeugs verwendet.

13. Triebwerk nach einem der Ansprüche 10 bis 12, **dadurch gekennzeichnet, dass** als Luftdaten eine im Bereich des Triebwerkseinlaufs gemessene Strömungsgeschwindigkeit und/oder Temperatur der strömenden Luft als Eingangsignal zur Verwendung durch die Ansteuerungsfunktion verwendet wird.

14. Flugzeugsystem mit einer Hilfsenergie-Versorgungseinrichtung mit einem als Hilfstriebwerk ausgeführten Triebwerk, das nach einem der Ansprüche 10 bis 13 ausgeführt ist.

15. Flugzeugsystem nach dem Anspruch 14, **dadurch gekennzeichnet, dass** die Ansteuerungsfunktion eine Funktion aufweist, mit der die Klappen zwischen einer Abdeckungsstellung, bei der der Durchsatz der Einlaufströmung minimal ist, und einer offenen Stellung, bei der der Durchsatz der Einlaufströmung maximal ist, bewegt werden können, dass das Flugzeugsystem eine Energieversorgungs-Vorrichtung aufweist, die ein Kommandosignal an die Ansteuerungsfunktion zum Bewegen der Triebwerks-Einlaufklappen (K) von ihrer Abdeckungsstellung in ihre offene Stellung sendet, wenn sich die Energieversorgungsvorrichtung das Hilfstriebwerk aktiviert.

## Claims

1. An engine intake flap (K) for mounting on the housing of an air intake or air intake channel of an aircraft engine, featuring a first end (E1) and a second end (E2) that lies opposite of and is spaced apart from the first end in the longitudinal direction (L) of the intake flap, wherein the longitudinal direction (L) is directed opposite to the flow direction (S) of the air flowing into the engine during the intended use, and wherein the intake flap features:
an intake flap base body (1) with a connecting device for a hinged connection in order to hinge the intake flap base body (1) to the housing of the air intake or air intake channel with a hinge axis (A) extending along the second end (E2),
**characterized by** an intake flap extension part (2) that is structurally integrated into the intake flap base body (1) and features a first and a second lateral part (5, 6) that respectively originates at the intake flap base body (1) and extends in the longitudinal direction (L) on the two lateral edges (1 a, 1 b) of the intake flap (K) that lie opposite of one another, as well as a plurality of cross braces (11) that are arranged on and extend between the lateral parts (5, 6) transverse to the longitudinal direction (L).

2. The engine intake flap (K) according to claim 1, **characterized in that** the intake flap extension part (2) is mounted on the intake flap base body (1) in the form of a component that can be attached to the intake flap base body (1).

3. The engine intake flap (K) according to one of the preceding claims, **characterized in that** at least some of the cross braces (11) are arranged on the lateral parts (5, 6) such that these are rotatable around their longitudinal axis (L).

4. The engine intake flap (K) according to one of the preceding claims, **characterized in that** the cross braces (11) have a wing-shaped cross section and that at least some of the cross braces (11) are springably prestressed into a starting position.

5. The engine intake flap (K) according to one of the preceding claims, **characterized in that** the cross braces (11) are manufactured of elastic material that is bent and/or distorted by the air flow (S) that occurs during the intended use and flows along the longitudinal direction (L), namely to such a degree that an ice layer formed on the cross braces (11) can be cracked off.

6. An engine intake flap (K) that is designed for being arranged on the housing of an air intake or air intake channel of an aircraft engine and features a first end (E1) and a second end (E2) that lies opposite of and is spaced apart from the first end in the longitudinal direction (L) of the intake flap, wherein the longitudinal direction (L) is directed opposite to the flow direction (S) of the air flowing into the engine during the intended use, and wherein the intake flap features:
■ an intake flap base body (1) with a connecting device for a hinged connection in order to hinge the intake flap base body (1) to the housing of the air intake or air intake channel with a hinge axis (A) extending along the second end (E2),
and is **characterized by**
■ an intake flap extension part (2) that is structurally integrated into the intake flap base body (1) and features a first and a second lateral part (5, 6) that respectively originates at the intake flap base body (1) and extends in the longitudinal direction (L) on the two lateral edges (1 a, 1 b) of the intake flap (K) that lie opposite of one another, as well as a plurality of cross braces (11) that are arranged on and extend between the lateral parts (5, 6) transverse to the longitudinal direction (L),
■ a plurality of longitudinal braces (12) that are arranged on the intake flap base body (1) and respectively extend in the longitudinal direction (L) of the intake flap (K).

7. The engine intake flap (K) according to Claim 6, **characterized in that** the intake flap extension part (2) is mounted on the intake flap base body (1) in the form of a component that can be attached to the intake flap base body (1).

8. The engine intake flap (K) according to one of the preceding Claims 6 to 7, **characterized in that** the longitudinal braces (12) are manufactured of elastic material that is bent and/or distorted by the air flow (S) that occurs during the intended use and flows along the longitudinal direction (L), namely to such a degree that an ice layer formed on the cross braces (11) can be cracked off.

9. An engine with an air intake that is formed by an engine housing, wherein at least one engine intake flap (K) according to one of Claims 1 to 8 is arranged on the front edge that is directed opposite to the air flow (S) occurring during the intended use.

10. The engine according to Claim 9, **characterized in that** several engine intake flaps (K) are arranged adjacent to one another along the circumference of the engine housing referred to the flow direction (S), and that at least one actuator for adjusting the respective engine intake flap (K) about its hinge axis (A) is respectively arranged on the engine intake flaps (K), and **in that** the engine is provided with an actuating device that has an actuating function with an interface to a flight control system and/or an engine control system and is realized in such a way that it generates command signals for controlling the actuators of the engine intake flaps (K) in response to the receipt of air data from the flight control system and/or of a current or required engine power from the flight control system and/or the engine control system and transmits these commands signals to the actuators of the engine intake flaps (K) so as to adjust the engine intake flaps (K) about their hinge axis (A) and thusly adjust the flow in the intake.

11. The engine according to Claim 10, **characterized in that**, if the engine intake flaps (K) are designed with longitudinal braces that are rotatable about their longitudinal axis, actuators are coupled to at least some of the longitudinal braces in order to vary the rotational position of the cross braces (11), and **in that** the engine is provided with an actuating device that has an actuating function with an interface to a flight control system and/or an engine control system and is realized in such a way that it can actuate the actuators for varying the rotational position of the cross braces (11) in response to the receipt of air data from the flight control system and/or of a current or required engine power from the flight control system and/or the engine control system so as to adjust the cross braces (11) about their longitudinal axis (L11) and thusly adjust the flow in the intake.

12. The engine according to claim 10 or 11, **characterized in that** the actuating function is realized in such a way that it utilizes the flow velocity of the aircraft as air data.

13. The engine according to one of claims 10 to 12, **characterized in that** as air data a flow velocity and/or temperature of the flowing air that is measured in the region of the engine intake is utilized as input signal to be used by the actuating function.

14. An aircraft system featuring an auxiliary energy supply unit with an engine in the form of an auxiliary engine realized in accordance with one of Claims 10 to 13.

15. The aircraft system according to claim 14, **characterized in that** the actuating function has a function that makes it possible to move the flaps between a shielding position, in which the minimum throughput of the intake flow is adjusted, and an open position, in which the maximum throughput of the intake flow is adjusted, and **in that** the aircraft system features an energy supply unit that transmits a command signal to the actuating function in order to move the engine intake flaps (K) from their shielding position into their open position when the energy supply unit activates the auxiliary engine.

## Revendications

1. Clapet d'entrée de groupe moteur (K) à placer sur un carter d'une entrée d'air ou d'un canal d'entrée d'air d'un groupe moteur d'un avion, comprenant une première extrémité (E1) et une seconde extrémité (E2) située à l'opposé de la première extrémité et espacée dans une direction longitudinale (L) du clapet d'entrée, la direction longitudinale (L) étant dirigée, avec une utilisation réglementaire, dans le sens contraire au sens d'écoulement (S) de l'air entrant dans le groupe moteur, présentant :
■ un corps de base de clapet d'entrée (1) doté d'un dispositif de raccordement pour une liaison d'articulation pour la liaison articulée du corps de base de clapet d'entrée (1) sur le carter de l'entrée d'air ou du canal d'entrée d'air avec un axe de rotation (A) agencé le long de la seconde extrémité (E2) et **caractérisé par**
■ une partie de prolongement de clapet d'entrée (2) intégrée au niveau de la structure avec le corps de base de clapet d'entrée (1), laquelle partie présente une première et une seconde partie latérale (5, 6), lesquelles s'étendent chacune sur les deux bords latéraux (1 a, 1 b), disposés dans le sens opposé l'un à l'autre et agencés dans le sens longitudinal (L), du clapet d'entrée (K) à partir du corps de base de clapet d'entrée (1), comprenant une pluralité d'entretoises transversales (11), qui sont disposées sur les parties latérales (5, 6) et sont agencées transversalement à la direction longitudinale (L) entre ces parties.

2. Clapet d'entrée de groupe moteur (K) selon la revendication 1, **caractérisé en ce que** la partie de prolongement de clapet d'entrée (2) est montée sur le corps de base de clapet d'entrée (1) sous la forme d'un composant pouvant être posé sur le corps de base de clapet d'entrée (1).

3. Clapet d'entrée de groupe moteur selon l'une quelconque des revendications précédentes, **caractérisé en ce qu'**au moins une partie des entretoises transversales (11) est disposée sur les parties latérales (5, 6) de façon à pouvoir tourner autour de leur axe longitudinal (L11).

4. Clapet d'entrée de groupe moteur (K) selon l'une quelconque des revendications précédentes, **caractérisé en ce que** les coupes transversales des entretoises transversales (11) ont une forme d'aile et **en ce qu'**au moins une partie des entretoises transversales (11) sont précontraintes de façon élastique dans une position de départ.

5. Clapet d'entrée de groupe moteur (K) selon l'une quelconque des revendications précédentes, **caractérisé en ce que** les entretoises transversales (11) sont formées dans du matériau élastique, dans lequel ces entretoises se plient et/ou se tordent, avec l'écoulement d'air (S) apparaissant de façon normale et s'écoulant le long de la direction longitudinale (L), dans une proportion telle qu'une couche de glace formée sur les entretoises transversales (11) peut être détachée.

6. Clapet d'entrée de groupe moteur (K) à placer sur le carter d'une entrée d'air ou d'un canal d'entrée d'air d'un groupe moteur d'un avion, comprenant une première extrémité (E1) et une seconde extrémité (E2) disposée de façon opposée à cette première extrémité et espacée dans le sens longitudinal (L) du clapet d'entrée, le sens longitudinal (L) étant orienté, avec une utilisation réglementaire, dans le sens contraire au sens d'écoulement (S) de l'air entrant dans le groupe moteur, présentant :
■ un corps de base de clapet d'entrée (1) avec un dispositif de raccordement pour une liaison d'articulation pour la liaison articulée du corps de base de clapet d'entrée (1) sur le carter de l'entrée d'air ou du canal d'entrée d'air avec un axe de rotation (A) agencé le long de la seconde extrémité (E2) et **caractérisé par**
■ une partie de prolongement de clapet d'entrée (2) intégrée au niveau de la structure avec le corps de base de clapet d'entrée (1), laquelle partie présente une première et une seconde partie latérale (5, 6), lesquelles s'étendent chacune à partir du corps de base de clapet d'entrée (1) respectivement sur les deux bords latéraux (5, 6), disposés dans le sens opposé l'un à l'autre et agencés dans le sens longitudinal (L), du clapet d'entrée (K),
■ comprenant une pluralité d'entretoises longitudinales (12), qui sont disposées sur le corps de base de clapet d'entrée (1) et s'étendent respectivement dans le sens longitudinal (L) du clapet d'entrée (K).

7. Clapet d'entrée de groupe moteur (K) selon la revendication 6, **caractérisé en ce que** la partie de prolongement de clapet d'entrée (2) est montée sur le corps de base de clapet d'entrée (1) sous forme d'un composant pouvant être posé sur le corps de base de clapet d'entrée (1).

8. Clapet d'entrée de groupe moteur (K) selon l'une quelconque des revendications précédentes 6 à 7, **caractérisé en ce que** les entretoises longitudinales (12) sont formées dans du matériau élastique, dans lequel ces entretoises se plient et/ou se tordent, avec l'écoulement d'air (S) apparaissant normalement et s'écoulant le long de la direction longitudinale (L), dans une proportion telle qu'une couche de glace formée sur les entretoises transversales (11) peut être enlevée.

9. Groupe moteur comprenant une entrée d'air formée par un carter de groupe moteur, au moins un clapet d'entrée de groupe moteur (K) selon l'une quelconque des revendications 1 à 8 étant disposé sur la zone de bordure avant, dirigée dans le sens contraire à l'écoulement d'air (S) présent normalement.

10. Groupe moteur selon la revendication 9, **caractérisé en ce que** plusieurs des clapets d'entrée de groupe moteur (K) sont disposés les uns à côté des autres, vus dans le sens d'écoulement (S), le long de la périphérie du carter de groupe moteur, et **en ce que**, sur chacun des clapets d'entrée de groupe moteur (K), est disposé au moins un servomoteur pour le réglage du clapet d'entrée de groupe moteur (K) respectif autour de son axe de rotation (A), **en ce que** le groupe moteur comporte un dispositif d'activation, qui présente une fonction d'activation dotée d'une interface avec un système de guidage en vol et/ou un système de commande de groupe moteur et qui est réalisé de telle sorte que celui-ci génère, suite à la réception de données sur l'air de vol du système de guidage en vol et/ou d'une puissance de groupe moteur actuelle ou demandée du système de guidage en vol et/ou du système de commande de groupe moteur, des signaux d'instruction pour commander les servomoteurs des clapets d'entrée de groupe moteur (K) et les envoie aux servomoteurs des clapets d'entrée de groupe moteur (K), afin de régler les clapets d'entrée de groupe moteur (K) autour de leur axe de rotation (A) pour le réglage de l'écoulement dans l'entrée.

11. Groupe moteur selon la revendication 10, **caractérisé en ce que**, dans la conception des clapets d'entrée de groupe moteur (K) avec des entretoises longitudinales pouvant tourner autour de leur axe longitudinal, des actionneurs sont couplés à au moins une partie des entretoises longitudinales pour la variation de la position de rotation des entretoises transversales (11), **en ce que** le groupe moteur présente un dispositif d'activation, qui présente une fonction d'activation dotée d'une interface avec un système de guidage en vol et/ou un système de commande de groupe moteur et qui est conçu de telle sorte que, suite à la réception de données sur l'air du système de guidage en vol et/ou d'une puissance de groupe moteur actuelle ou exigée du système de guidage en vol et/ou du système de commande de groupe moteur, celui-ci peut activer les servomoteurs pour la variation de la position de rotation des entretoises transversales (11), afin de déplacer les entretoises transversales (11) autour de leur axe longitudinal (L11) pour le réglage de l'écoulement dans l'entrée.

12. Groupe moteur selon la revendication 10 ou 11, **caractérisé en ce que** la fonction d'activation est conçue de telle sorte que celle-ci utilise comme données sur l'air la vitesse d'écoulement de l'avion.

13. Groupe moteur selon l'une quelconque des revendications 10 à 12, **caractérisé en ce qu'**on utilise comme données sur l'air une vitesse d'écoulement et/ou une température, mesurée dans la zone de l'entrée de groupe moteur, de l'air circulant comme signal d'entrée pour une utilisation par la fonction d'activation.

14. Système d'avion doté d'un dispositif d'alimentation en énergie auxiliaire avec un groupe moteur conçu comme groupe moteur auxiliaire, qui est réalisé selon l'une quelconque des revendications 10 à 13.

15. Système d'avion selon la revendication 14, **caractérisé en ce que** la fonction d'activation présente une fonction, avec laquelle les clapets peuvent être déplacés entre une position de recouvrement, dans laquelle le débit de l'écoulement d'entrée est minimal, et une position ouverte, dans laquelle le débit de l'écoulement d'entrée est maximal, **en ce que** le système d'avion présente un dispositif d'alimentation en énergie, qui envoie un signal d'instruction à la fonction d'activation pour déplacer les clapets d'entrée de groupe moteur (K) de leur position de revêtement dans leur position ouverte, lorsque le dispositif d'alimentation en énergie active le groupe moteur auxiliaire.
